# FASCICULE DE BREVET EUROPEEN

(11) **EP 2 183 956 B1**
(45) Date de publication et mention de la délivrance du brevet: **14.03.2012**
(21) Numéro de dépôt: 09174875.6
(22) Date de dépôt: 03.11.2009
(51) Int. Cl.: A01D 78/10

(54) **Machine de fenaison**
Heuwerbungsmaschine
Haymaking machine

(30) Priorité: 06.11.2008 FR 0857528
(43) Date de publication de la demande: 12.05.2010
(73) Titulaire: KUHN S.A., 67700 Saverne (FR)
(72) Inventeur: Speich, Cédric, 67500, Haguenau (FR); Schott, Mathieu, 67310, Cosswiller (FR); Neuerburg, Horst, 67440, Hengwiller (FR)
(74) Mandataire: Andres, Jean-Claude

(56) Documents cités:
- EP-A1- 0 937 383
- EP-A1- 1 108 352
- EP-A1- 1 488 685
- EP-A1- 1 929 856
- DE-U1- 20 311 102

## Description

La présente invention se rapporte à une machine de fenaison destinée notamment à l'andainage de végétaux couchés sur le sol. Cette machine comporte une structure porteuse centrale sur laquelle sont articulés des bras latéraux déplaçables entre une position sensiblement horizontale pour le travail et une position sensiblement verticale pour le transport, sur chacun de ces bras latéraux étant articulée une poutrelle au moyen d'un premier axe sensiblement vertical en position de travail, chacune de ces poutrelles portant au moins deux rotors d'andainage munis de roulettes qui se déplacent sur le sol en position de travail.

Sur une machine de ce genre qui est décrite dans la demande de brevet EP 1 108 352 le montage des rotors d'andainage ne leur permet pas de suivre correctement le relief du sol. En conséquence, dans les terrains avec d'importantes dénivellations il y a des zones dans lesquelles les fourches des rotors d'andainage grattent le sol et souillent les végétaux avec de la terre, ainsi que des zones où lesdites fourches sont trop éloignées du sol et ne ratissent pas la totalité des végétaux. Ces végétaux non ratissés ne sont alors pas récoltés ce qui peut représenter des pertes notables.

D'autres machines connues possèdent un seul rotor d'andainage de grand diamètre de chaque côté de la structure centrale. En raison de leur grand diamètre, ces rotors ne peuvent pas non plus s'adapter à toutes les dénivellations du sol. En sus, des parties de ces rotors doivent être démontées ou repliées lors de la mise en position de transport pour éviter que la hauteur de la machine ne devienne trop importante.

La présente invention a pour but de proposer une machine pour l'andainage qui est facile à utiliser et qui permet d'avoir une bonne adaptation des rotors d'andainage au relief du sol.

A cet effet, une importante caractéristique de l'invention consiste en ce que chaque poutrelle est articulée sur le bras latéral correspondant au moyen d'au moins un deuxième axe sensiblement horizontal en position de travail et que chaque rotor d'andainage est articulé sur la poutrelle correspondante au moyen d'au moins un premier axe sensiblement horizontal en position de travail. Le deuxième axe d'articulation de la poutrelle permet à chaque rotor d'andainage de se déplacer en hauteur indépendamment de l'autre rotor d'andainage qui est relié à la même poutrelle. D'autre part, chacun des rotors d'andainage peut pivoter autour de son premier axe d'articulation avec la poutrelle correspondante pour suivre ainsi les dénivellations qui sont plus petites. Grâce à ces facultés d'adaptation au relief, les rotors d'andainage peuvent ramasser proprement la majeure partie des végétaux se trouvant au sol.

Selon une autre caractéristique de l'invention, chaque poutrelle est articulée sur le bras latéral correspondant au moyen d'un troisième axe sensiblement horizontal en position de travail. Ce troisième axe forme avantageusement un croisillon avec le deuxième axe. De cette manière, la poutrelle peut bouger dans toutes les directions par rapport au bras latéral correspondant. Ceci procure plus de possibilités aux rotors d'andainage pour suivre individuellement les dénivellations du sol.

Selon une autre caractéristique de l'invention, chaque rotor d'andainage est articulé sur la poutrelle correspondante au moyen d'un second axe sensiblement horizontal en position de travail. Ce deuxième axe forme avantageusement un croisillon avec le premier axe. Ces caractéristiques permettent à chaque rotor d'andainage de suivre intégralement toutes les dénivellations qu'il peut rencontrer et de fournir ainsi un travail d'excellente qualité.

D'autres caractéristiques et avantages de l'invention ressortiront des revendications et de la description ci-après d'exemples de réalisation non limitatifs de l'invention avec référence aux dessins annexés dans lesquels :
- la figure 1 représente une vue de dessus d'un premier exemple de réalisation d'une machine selon l'invention en position de travail,
- la figure 2 représente une vue de côté de la machine selon la figure 1,
- la figure 3 représente une vue de dessus d'un autre exemple de réalisation d'une machine selon l'invention en position de travail,
- la figure 4 représente, à plus grande échelle, une vue de détail selon la flèche IV de la figure 3,
- la figure 5 représente une vue de côté de l'exemple selon la figure 3 en position de transport.

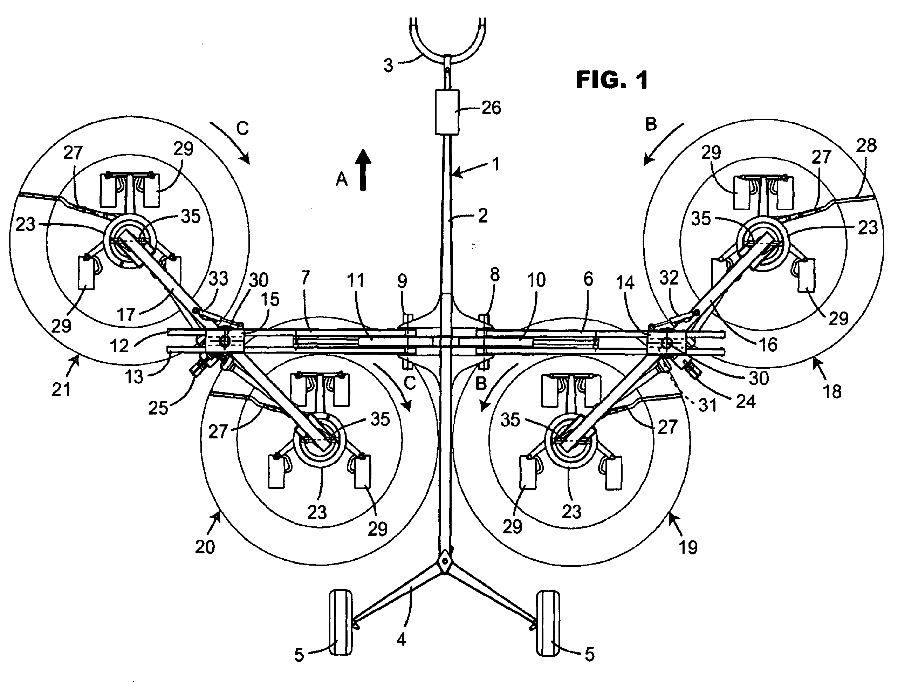

Telle qu'elle est représentée sur la figure 1, la machine selon l'invention comporte une structure porteuse centrale (1). Celle-ci est constituée par une poutre principale (2) qui possède à son extrémité avant un dispositif d'accouplement (3) pour l'accrocher à un tracteur (non représenté) destiné à animer la machine et à la déplacer dans le sens d'avancement (A). Cette poutre (2) porte à son extrémité arrière une traverse (4) avec deux roues (5) qui s'appuient sur le sol.

Ladite structure porteuse centrale (1) comporte aussi des bras latéraux (6 et 7) qui sont articulés sur la poutre (2) au moyen d'axes (8 et 9) dirigés dans la direction d'avancement (A). Ces bras latéraux (6 et 7) sont déplaçables autour desdits axes (8 et 9), au moyen de vérins hydrauliques (10 et 11), entre une position sensiblement horizontale pour le travail et une position sensiblement verticale pour le transport. Chaque bras latéral (6, 7) est constitué par deux longerons (12 et 13) sensiblement parallèles. Chacun de ces bras (6 et 7) porte un chariot (14, 15) qui est déplaçable longitudinalement sur le bras correspondant (6, 7) par exemple manuellement ou à l'aide d'un vérin hydraulique. A chaque chariot (14, 15) est liée une poutrelle (16, 17) qui porte elle-même au moins deux rotors d'andainage (18, 19 et 20, 21).

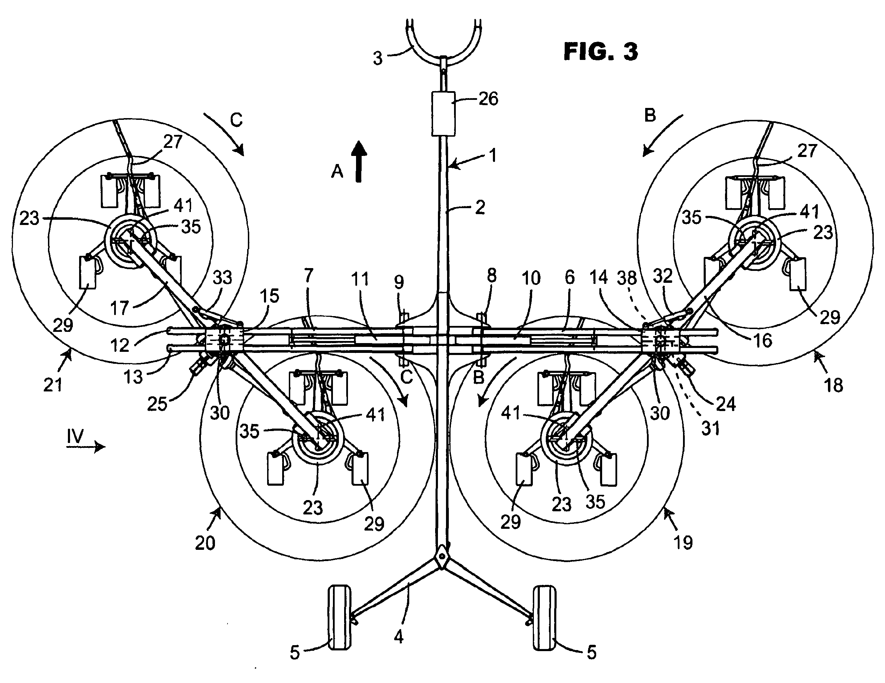

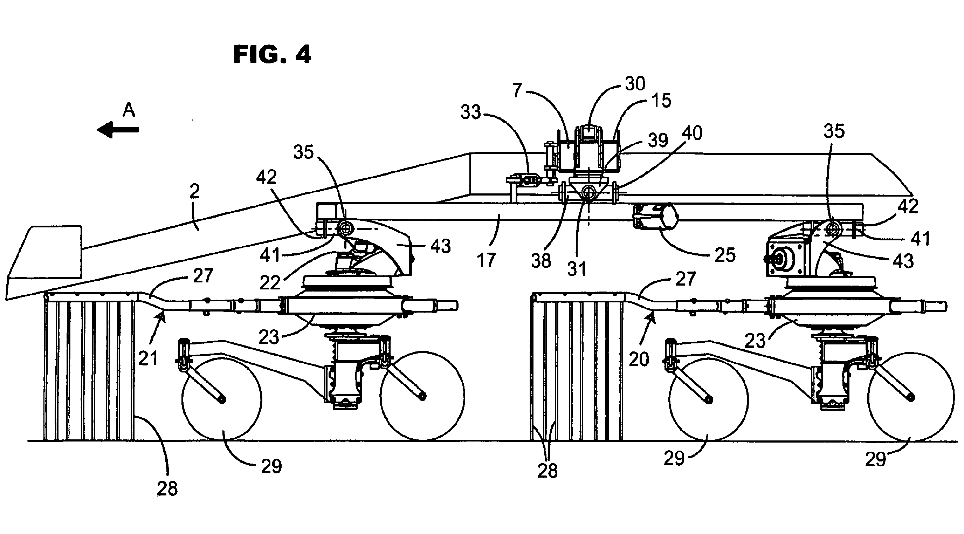

Chacun de ces rotors d'andainage (18 à 21) comporte un axe central (22) sur lequel est monté un boîtier (23) qui peut être entraîné en rotation durant le travail. Cet entraînement peut être assuré à partir d'un arbre de prise de force du tracteur. Il est ainsi possible d'avoir des arbres de transmission qui assurent la liaison entre ledit arbre de prise de force et les différents rotors d'andainage (18 à 21). Il est également possible d'avoir un entraînement en rotation utilisant des moteurs hydrauliques (24 et 25) comme cela est représenté sur les figures 3 et 4. Dans ce cas, il peut être prévu un moteur hydraulique (24, 25) sur chaque poutrelle (16, 17) et à partir duquel s'étendent des arbres de transmission intermédiaires qui animent les rotors (18 à 21). Lesdits moteurs hydrauliques (24 et 25) peuvent être alimentés à partir d'une pompe hydraulique et d'un réservoir d'huile (26) qui sont disposés sur la poutre centrale (2) et auxquels ces moteurs hydrauliques (24 et 25) sont reliés par des tuyaux flexibles non représentés.

Les boîtiers (23) des rotors d'andainage (18 à 21) sont munis de plusieurs bras (27) qui s'étendent vers l'extérieur et qui portent des outils de râtelage (28). Ces bras (27) sont commandés au moyen d'une came fixe, située à l'intérieur du boîtier (23) correspondant, de manière à ce qu'ils pivotent sur eux-mêmes lors de chaque révolution dudit boîtier (23). Ils déplacent alors leurs outils (28) d'une position de râtelage dans une position pour la dépose des végétaux et inversement. L'axe central (22) de chaque rotor d'andainage (18 à 21) porte en sus à son extrémité inférieure plusieurs roulettes (29) qui se déplacent sur le sol en position de travail et font suivre au rotor (18 à 21) correspondant les dénivellations de celui-ci.

Conformément à une importante caractéristique de l'invention, chaque poutrelle (16, 17) est articulée par rapport à son bras porteur (6, 7) au moyen d'un premier axe (30) sensiblement vertical et d'au moins un deuxième axe (31) sensiblement horizontal lorsque la machine est en position de travail. Le premier axe (30) est logé de manière pivotante dans un palier du chariot (14, 15) correspondant. Un vérin hydraulique (32, 33) est articulé sur le chariot (14, 15) et la poutrelle (16, 17) correspondante. Ce vérin hydraulique (32, 33) permet de pivoter la poutrelle (16, 17) sur le premier axe (30) entre une position oblique par rapport au sens d'avancement (A) pour le travail et une position parallèle au sens d'avancement (A) par exemple pour le transport.

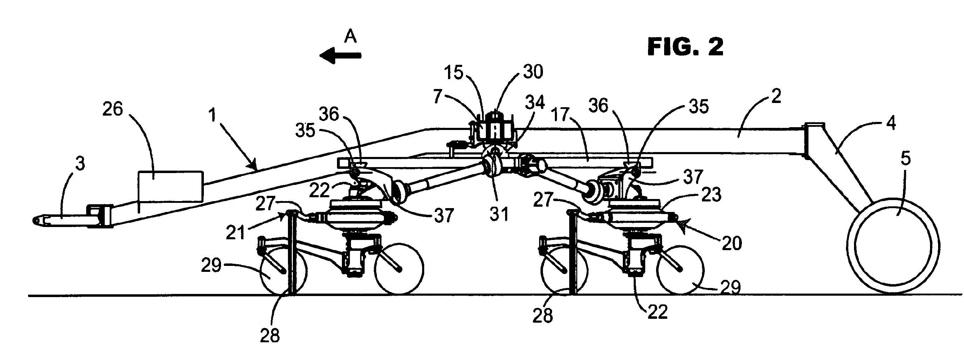

Dans l'exemple représenté sur les figures 1 et 2, le deuxième axe d'articulation (31) est relié au premier axe (30). La poutrelle (16, 17) correspondante comporte des pattes (34) formant une chape au moyen de laquelle elle est articulée sur ce deuxième axe (31). En position de travail, ce deuxième axe d'articulation (31) est sensiblement perpendiculaire au sens d'avancement (A). En sus, il se situe sensiblement à égale distance des deux rotors d'andainage (18 et 19, 20 et 21) correspondants.

Selon une autre caractéristique, chaque rotor d'andainage (18 à 21) est articulé sur la poutrelle (16, 17) correspondante au moyen d'au moins un premier axe (35) sensiblement horizontal. Celui-ci s'étend à travers des pattes (36) dirigées vers le bas qui sont solidaires de la poutrelle (16, 17) et des pattes (37) dirigées vers le haut qui sont solidaires du rotor d'andainage (18 à 21) correspondant. Il ressort de la figure 1 que ces premiers axes d'articulation (35) sont sensiblement perpendiculaires au sens d'avancement (A) lorsque la machine est en position de travail.

Dans l'exemple représenté sur les figures 3 et 4, chaque poutrelle (16, 17) est en sus articulée par rapport au bras latéral (6, 7) correspondant au moyen d'un troisième axe (38) sensiblement horizontal en position de travail. Ce troisième axe (38) forme un angle d'environ 90° avec le second axe d'articulation (31). Ces deux axes (38 et 31) peuvent former un croisillon, l'un d'entre eux étant articulé sur des pattes (39) formant une chape reliée à l'axe sensiblement vertical (30) correspondant et, l'autre étant articulé sur des pattes (40) liées à la poutrelle (16, 17) correspondante.

Selon l'exemple représenté sur les figures 3 et 4, chaque rotor d'andainage (18 à 21) peut être articulé sur la poutrelle (16, 17) correspondante au moyen d'un premier axe (35), comme dans l'exemple des figures 1 et 2, et d'un second axe (41) qui est également sensiblement horizontal en position de travail. Ce second axe (41) forme un angle d'environ 90° avec le premier axe (35). Ces deux axes d'articulation forment avantageusement un croisillon dans lequel l'un (41) de ces axes est articulé sur la poutrelle (16, 17) au moyen de pattes (42) tandis que l'autre axe (35) est relié au rotor d'andainage (18 à 21) correspondant au moyen de pattes (43).

Durant le travail, les rotors d'andainage (18 à 21) des machines selon les deux exemples de réalisation décrits sont transposés, au moyen des bras porteurs (6 et 7), dans une position où leurs roulettes (29) se déplacent sur le sol. Les poutrelles (16 et 17) sont amenées dans des positions obliques par pivotement autour des premiers axes (30) de sorte que les rotors (18 et 19, 20 et 21) correspondants soient décalés par rapport au sens d'avancement (A), les rotors (18 et 21) les plus en avant étant plus éloignés de la poutre centrale (2) que les rotors (19 et 20) les plus en arrière. Par ailleurs, ces rotors (18 à 21) sont entraînés en rotation dans le sens des flèches (B et C). Ils déplacent alors les végétaux qui se trouvent au sol vers le milieu de la machine pour former un andain de gros volume.

Sur la machine selon l'exemple des figures 1 et 2, le second axe d'articulation (31) permet à chaque poutrelle (16, 17) de pivoter par rapport à son bras porteur (6, 7) dans un plan sensiblement vertical. De ce fait, chacun des deux rotors (18 et 19, 20 et 21) correspondants peut se déplacer en hauteur pour suivre les dénivellations du sol indépendamment de l'autre. De plus, sur cette machine, chaque rotor (18 à 21) peut pivoter autour du premier axe d'articulation (35) par rapport à la poutrelle (16, 17) correspondantes. Ainsi, la partie avant de chaque rotor (18 à 21) peut se déplacer en hauteur par rapport à la partie arrière pour mieux s'adapter aux dénivellations. Cela permet notamment de maintenir les outils de râtelage (28) à une distance constante du sol dans la partie avant de leur trajectoire.

Sur la machine selon l'exemple des figures 3 et 4, le troisième axe d'articulation (38) de chaque poutrelle (16, 17) permet à cette dernière de pivoter latéralement par rapport à son bras porteur (6, 7). La combinaison des seconds et troisièmes axes (31 et 38) permet à chaque poutrelle (16, 17) de pivoter dans toutes les directions, ce qui lui confère une importante liberté qui favorise davantage l'adaptation individuelle des rotors (18 à 21) correspondants aux dénivellations du sol.

Les seconds axes d'articulations (41) des rotors (18 à 21) leurs permettent également de pivoter vers les côtés par rapport à la poutrelle (16, 17) correspondante. Les premiers et seconds axes d'articulation (35 et 40) en forme de croisillons permettent ainsi à ces rotors (18 à 21) de se déplacer dans toutes les directions en vue d'obtenir une parfaite adaptation aux dénivellations qu'ils peuvent rencontrer. Ils ramassent ainsi la totalité des végétaux qui sont couchés sur le sol. Cette adaptation aux dénivellations permet aussi de ramasser le fourrage indemne des souillures que pourraient y introduire les outils (28) en grattant le sol lors de la rencontre d'une bosse.

Il est évident qu'il est possible de réaliser, d'une part, des machines utilisant les articulations avec les deux axes (30 et 31) entre les bras porteurs (6, 7) et les poutrelles (16, 17) de l'exemple selon les figures 1 et 2 et les articulations avec les deux axes (35 et 41) entre les poutrelles (16 et 17) et les rotors (18 à 21) de l'exemple selon les figures 3 et 4 et, d'autre part, des machines utilisant les articulations avec les trois axes (30, 31 et 38) entre les bras porteurs (6 et 7) et les poutrelles (16 et 17) de l'exemple selon les figures 3 et 4 et les articulations avec uniquement les axes (35) entre les poutrelles (16 et 17) et les rotors (18 à 21) de l'exemple selon les figures 1 et 2.

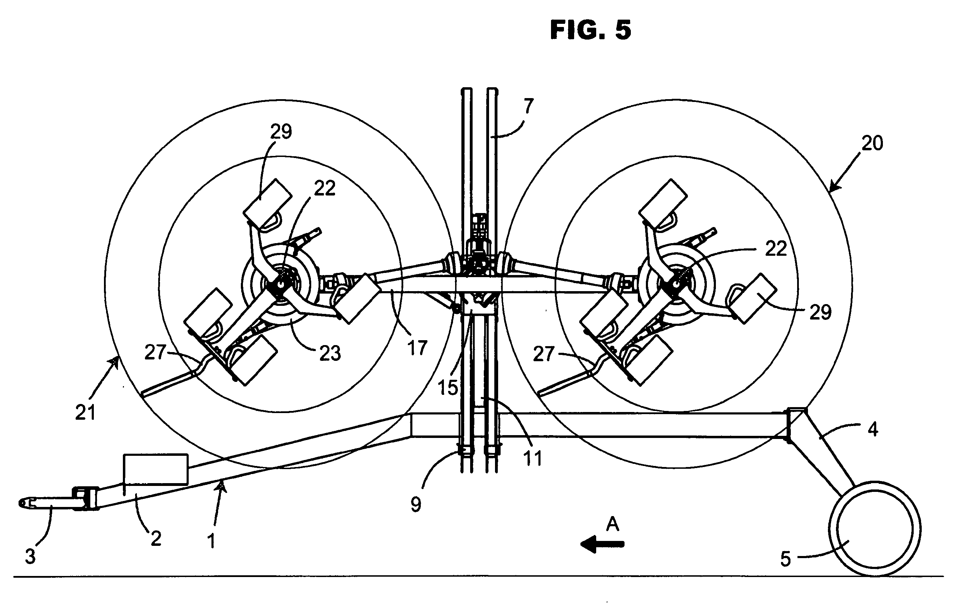

Pour le transport, l'encombrement de la machine est réduit pour permettre de la déplacer sur les chemins et les routes (voir figure 5). Pour amener la machine dans la position appropriée au transport, les poutrelles (16 et 17) sont pivotées autour des premiers axes (30) au moyen des vérins hydrauliques (32 et 33) et sont amenées dans une position où elles sont sensiblement parallèles à la poutre centrale (2). Ensuite, elles sont déplacées vers le haut par les bras porteurs (6 et 7) qui sont pivotés autour de leurs axes (8 et 9) au moyen des vérins hydrauliques (10 et 11). Enfin, lorsque lesdits bras porteurs (6 et 7) sont sensiblement verticaux, les chariots (14 et 15) peuvent être déplacés vers le bas de manière à réduire la hauteur de la machine. Cette hauteur peut ainsi être inférieure à la hauteur maximale autorisée sans qu'il soit nécessaire de démonter des bras porte-outils (27) des rotors d'andainage (18 à 21).

Le retour en position d'andainage s'effectue en inversant les déplacements.

L'invention n'est pas limitée aux modes de réalisation décrits ci-dessus et représentés sur les dessins annexés. Des modifications sont possibles, notamment en ce qui concerne la constitution ou le nombre des divers éléments ou par substitution d'équivalents techniques, sans pour autant sortir du domaine de protection des revendications.

## Revendications

1. Machine de fenaison destinée notamment à l'andainage de végétaux couchés sur le sol, comportant une structure porteuse centrale sur (1) laquelle sont articulés des bras latéraux (6, 7) déplaçables entre une position sensiblement horizontale pour le travail et une position sensiblement verticale pour le transport, sur chacun de ces bras latéraux (6, 7) étant articulée une poutrelle au moyen d'un premier axe (30) sensiblement vertical en position de travail, chacune de ces poutrelles, (16, 17) portant au moins deux rotors d'andainage (18 à 21) munis de roulettes (29) qui se déplacent sur le sol en position de travail, ***caractérisée par le fait que*** chaque poutrelle (16, 17) est articulée sur le bras latéral (6, 7) correspondant au moyen d'au moins un deuxième axe (31) sensiblement horizontal en position de travail et que chaque rotor d'andainage (18 à 21) est articulé sur la poutrelle (16, 17) correspondante au moyen d'au moins un premier axe (35) sensiblement horizontal en position de travail.

2. Machine selon la revendication 1, ***caractérisée par le fait* que** le deuxième axe d'articulation (31) sensiblement horizontal de chaque poutrelle (16, 17) sur le bras latéral (6, 7) correspondant est, en position de travail, sensiblement perpendiculaire au sens d'avancement (A).

3. Machine selon la revendication 1 ou 2, ***caractérisée par le fait* que** le deuxième axe d'articulation (31) de chaque poutrelle (16, 17) sur le bras latéral (6, 7) correspondant se situe sensiblement à égale distance des deux rotors d'andainage (18 et 19, 20 et 21) correspondants.

4. Machine selon la revendication 1, ***caractérisée par** le fait* le premier axe d'articulation (35) de chaque rotor d'andainage (18 à 21) sur la poutrelle (16, 17) correspondante est, en position de travail, sensiblement perpendiculaire au sens d'avancement (A).

5. Machine selon la revendication 1 ou 4, ***caractérisée par le fait* que** chaque rotor d'andainage (18 à 21) est articulé sur la poutrelle (16, 17) correspondante au moyen d'un second axe (41) sensiblement horizontal en position de travail.

6. Machine selon la revendication 5, ***caractérisée par le fait* que** le second axe d'articulation (41) de chaque rotor d'andainage (18 à 21) forme un angle d'environ 90° avec le premier axe d'articulation (35).

7. Machine selon la revendication 6, ***caractérisée par le fait* que** le premier axe (35) et le second axe (41) de l'articulation entre chaque rotor (18 à 21) et la poutrelle (16, 17) correspondante forment un croisillon.

8. Machine selon l'une quelconque des revendications 1 à 3, ***caractérisée par le fait* que** chaque poutrelle (16, 17) est articulée par rapport au bras latéral (6, 7) correspondant au moyen d'un troisième axe (38) sensiblement horizontal en position de travail.

9. Machine selon la revendication 8, ***caractérisée par le fait* que** le troisième axe d'articulation (38) de chaque poutrelle (16, 17) forme un angle d'environ 90° avec le second axe d'articulation (31).

10. Machine selon la revendication 9, ***caractérisée par le fait* que** le deuxième axe (31) et le troisième axe (38) de l'articulation de chaque poutrelle (16, 17) forment un croisillon.

## Patentansprüche

1. Heuwerbungsmaschine, die insbesondere zum Schwaden von auf dem Boden liegenden Pflanzen bestimmt ist, mit einer mittleren Tragstruktur (1), an der seitliche Arme (6, 7) angelenkt sind, die zwischen einer für die Arbeit im Wesentlichen horizontalen Stellung und einer für den Transport im Wesentlichen vertikalen Stellung umstellbar sind, wobei an jedem dieser seitlichen Arme (6, 7) ein Balken mittels einer in Arbeitsstellung im Wesentlichen vertikalen ersten Achse (30) angelenkt ist, wobei jeder dieser Balken (16, 17) mindestens zwei Schwadkreisel (18 bis 21) trägt, die mit Rädern (29) versehen sind, die sich in Arbeitsstellung auf dem Boden bewegen, ***dadurch gekennzeichnet,* dass** jeder Balken (16, 17) an dem entsprechenden seitlichen Arm (6, 7) mittels mindestens einer in Arbeitsstellung im Wesentlichen horizontalen zweiten Achse (31) angelenkt ist, und dass jeder Schwadkreisel (18 bis 21) an dem entsprechenden Balken (16, 17) mittels mindestens einer in Arbeitsstellung im Wesentlichen horizontalen ersten Achse (35) angelenkt ist.

2. Maschine nach Anspruch 1, ***dadurch gekennzeichnet,* dass** die zweite im Wesentlichen horizontale Gelenkachse (31) jedes Balkens (16, 17) auf dem entsprechenden seitlichen Arm (6, 7) in Arbeitsstellung im Wesentlichen senkrecht zur Fahrtrichtung (A) ist.

3. Maschine nach Anspruch 1 oder 2, ***dadurch gekennzeichnet,* dass** die zweite Gelenkachse (31) jedes Balkens (16, 17) auf dem entsprechenden seitlichen Arm (6, 7) im Wesentlichen in gleichem Abstand zu den zwei entsprechenden Schwadkreiseln (18 und 19, 20 und 21) angeordnet ist.

4. Maschine nach Anspruch 1, ***dadurch gekennzeichnet,* dass** die erste Gelenkachse (35) jedes Schwadkreisels (18 bis 21) auf dem entsprechenden Balken (16, 17) in Arbeitsstellung im Wesentlichen senkrecht zur Fahrtrichtung (A) ist.

5. Maschine nach Anspruch 1 oder 4, ***dadurch gekennzeichnet,* dass** jeder Schwadkreisel (18 bis 21) an dem entsprechenden Balken (16, 17) mittels einer in Arbeitsstellung im Wesentlichen horizontalen zweiten Achse (41) angelenkt ist.

6. Maschine nach Anspruch 5, ***dadurch gekennzeichnet,* dass** die zweite Gelenkachse (41) jedes Schwadkreisels (18 bis 21) einen Winkel von ungefähr 90° mit der ersten Gelenkachse (35) bildet.

7. Maschine nach Anspruch 6, ***dadurch gekennzeichnet,* dass** die erste Achse (35) und die zweite Achse (41) des Gelenks zwischen jedem Schwadkreisel (18 bis 21) und dem entsprechenden Balken (16, 17) ein Kreuz bilden.

8. Maschine nach einem der Ansprüche 1 bis 3, ***dadurch gekennzeichnet,* dass** jeder Balken (16, 17) in Bezug zum entsprechenden seitlichen Arm (6, 7) mittels einer in Arbeitsstellung im Wesentlichen horizontalen dritten Achse (38) angelenkt ist.

9. Maschine nach Anspruch 8, ***dadurch gekennzeichnet,* dass** die dritte Gelenkachse (38) jedes Balkens (16, 17) einen Winkel von ungefähr 90° mit der zweiten Gelenkachse (31) bildet.

10. Maschine nach Anspruch 9, ***dadurch gekennzeichnet,* dass** die zweite Achse (31) und die dritte Achse (38) des Gelenks jedes Balkens (16, 17) ein Kreuz bilden.

## Claims

1. Haymaking machine intended in particular for the windrowing of plants lying on the ground, comprising a central carrier structure (1) on which lateral arms (6, 7) are articulated, which are displaceable between a substantially horizontal position for work and a substantially vertical position for transport, wherein a beam is articulated on each of these lateral arms (6, 7) by means of a first axis (30) which is substantially vertical in the work position, each of these beams (16, 17) carrying at least two windrowing rotors (18 to 21) provided with rollers (29) which move on the ground in the work position, ***characterized in* that** each beam (16, 17) is articulated on the corresponding lateral arm (6, 7) by means of at least a second axis (31) which is substantially horizontal in the work position and that each windrowing rotor (18 to 21) is articulated on the corresponding beam (16, 17) by means of at least a first axis (35) which is substantially horizontal in the work position.

2. Machine according to Claim 1, ***characterized in* that** the substantially horizontal second articulation axis (31) of each beam (16, 17) on the corresponding lateral arm (6, 7) is, in the work position, substantially perpendicular to the direction of travel (A).

3. Machine according to Claim 1 or 2, ***characterized in* that** the second articulation axis (31) of each beam (16, 17) on the corresponding lateral arm (6, 7) is situated substantially at an equal distance from the two corresponding windrowing rotors (18 and 19, 20 and 21).

4. Machine according to Claim 1, ***characterized in* that** the first articulation axis (3 5) of each windrowing rotor (18 to 21) on the corresponding beam (16, 17) is, in the work position, substantially perpendicular to the direction of travel(A).

5. Machine according to Claim 1 or 4, ***characterized in* that** each windrowing rotor (18 to 21) is articulated on the corresponding beam (16, 17) by means of a second axis (41) which is substantially horizontal in the work position.

6. Machine according to Claim 5, ***characterized in* that** the second articulation axis (41) of each windrowing rotor (18 to 21) forms an angle of approximately 90° with the first articulation axis (35).

7. Machine according to Claim 6, ***characterized in* that** the first axis (35) and the second axis (41) of the articulation between each rotor (18 to 21) and the corresponding beam (16, 17) form a cross.

8. Machine according to any one of Claims 1 to 3, ***characterized in* that** each beam (16, 17) is articulated with respect to the corresponding lateral arm (6, 7) by means of a third axis (38) which is substantially horizontal in the work position.

9. Machine according to Claim 8, ***characterized in* that** the third articulation axis (38) of each beam (16, 17) forms an angle of approximately 90° with the second articulation axis (31).

10. Machine according to Claim 9, ***characterized in* that** the second axis (31) and the third axis (38) of the articulation of each beam (16, 17) form a cross.
